# EUROPÄISCHE PATENTSCHRIFT

(11) **EP 1 144 828 B1**
(45) Veröffentlichungstag und Bekanntmachung des Hinweises auf die Patenterteilung: **11.01.2006**
(21) Anmeldenummer: 00983018.3
(22) Anmeldetag: 17.10.2000
(51) Int. Cl.: F02D 21/08, F02B 17/00

(54) **VERFAHREN ZUM BETREIBEN EINER BRENNKRAFTMASCHINE**
METHOD FOR OPERATING AN INTERNAL COMBUSTION ENGINE
PROCEDE PERMETTANT DE FAIRE FONCTIONNER UN MOTEUR A COMBUSTION INTERNE

(30) Priorität: 30.10.1999 DE 19952526
(43) Veröffentlichungstag der Anmeldung: 17.10.2001
(73) Patentinhaber: ROBERT BOSCH GMBH, 70442 Stuttgart (DE)
(72) Erfinder: HERYNEK, Roland, 75443 Oetisheim (DE)
(86) Internationale Anmeldenummer: PCT/DE2000/003636
(87) Internationale Veröffentlichungsnummer: WO 2001/033059

(56) Entgegenhaltungen:
- EP-A- 0 627 548
- EP-A- 0 828 063
- EP-A- 0 901 809
- EP-A- 0 919 711
- EP-A- 0 919 713
- DE-A- 19 858 990
- US-A- 5 564 283

## Beschreibung

### Stand der Technik

Die Erfindung betrifft ein Verfahren zum Betreiben einer Brennkraftmaschine insbesondere eines Kraftfahrzeugs, bei dem Kraftstoff in einer ersten Betriebsart während einer Verdichtungsphase und in einer zweiten Betriebsart während einer Ansaugphase in einen Brennraum eingespritzt wird, bei dem das Abgas einem Katalysator zugeführt wird, bei dem Abgas zurückgeführt wird, und bei dem die Abgasrückführrate der Abgasrückführung unter anderem in Abhängigkeit von der Temperatur des Katalysators gesteuert und/oder geregelt wird. Die Erfindung betrifft ebenfalls eine entsprechende Brennkraftmaschine sowie ein entsprechendes Steuergerät für eine derartige Brennkraftmaschine.

Ein derartiges Verfahren, eine derartige Brennkraftmaschine und ein derartiges Steuergerät sind beispielsweise von einer sogenannten Benzin-Direkteinspritzung bekannt. Dort wird Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist.

Insbesondere im Schichtbetrieb wird die Brennkraftmaschine mit Luftüberschuss betrieben. Dies kann zu hohen Temperaturen des Abgases führen. Ebenfalls im Schichtbetrieb ist es erforderlich, dass das Abgas mit Hilfe eines NOx-Speicherkatalysators zwischenspeichert wird, um es danach durch einen Drei-Wege-Katalysator zu reduzieren. Für den Betrieb des NOx-Speicherkatalysators darf dessen Temperatur eine bestimmte Grenztemperatur jedoch nicht überschreiten. Wird die Grenztemperatur überschritten, so erhöhen sich die im Abgas enthaltenen Schadstoffe.

Aus der DE 198 58 990 A1 ist ein Verfahren zum Betrieb eines NOx-Speicherkatalysators bekannt, wobei der Magerbetrieb ausgeschaltet wird und ein Betrieb mit λ <= 1,1 aufgenommen wird, wenn die Katalysatortemperatur größer als die Temperatur der Thermo-Desorption des NOx-Katalysators ist. Ferner wird gemäß der DE 198 58 990 Al bei Temperaturen des NOx-SpeicherKatalysators oberhalb der Thermo-Desorptionsschwelle in Schwachlastphasen die Abgasrückführrate angehoben. In Schubphasen wird bei einer Katalysatortemperatur oberhalb der Desorptionsschwelle dagegen die Abgasrückführrate abgesenkt und die Drosselklappe geöffnet.

Die EP 0 919 713 A2 offenbart ein Regelsystem für eine Otto-Brennkraftmaschine mit Direkteinspritzung und einem NOx-Katalysator zur Verringerung von NOx-Emissionen im Abgas. In einem Homogenbetrieb wird die Brennkraftmaschine mit Doppeleinspritzungen betrieben, um die Abgastemperatur zu reduzieren.

In der EP 828 063 A wird vorgeschlagen, die Abgasrückführrate einer Abgasrückführung zu vermindern, wenn die Temperatur des Katalysators steigt.

### Aufgabe und Vorteile der Erfindung

Aufgabe der Erfindung ist es, ein Verfahren zum Betreiben einer Brennkraftmaschine zu schaffen, mit dem die Schadstoffe im Abgas sicher auf einem möglichst geringen Niveau gehalten werden.

Diese Aufgabe wird bei einem Verfahren der eingangs genannten Art erfindungsgemäß dadurch gelöst, dass die Temperatur des Katalysators aus einer Temperatur des Abgases abgeleitet wird oder/und modelliert wird, und dass bei steigender Temperatur mehr Abgas zurückgeführt wird. Bei einer Brennkraftmaschine und einem Steuergerät der eingangs genannten Art wird die Aufgabe erfindungsgemäß entsprechend gelöst.

Durch eine entsprechende Beeinflussung der Abgasrückführrate kann die Temperatur des Katalysators vermindert oder erhöht werden. Dies wird bei der erfindungsgemäßen temperaturabhängigen Beeinflussung der Abgasrückführrate dazu ausgenutzt, die Temperatur des Katalysators unter der Grenztemperatur zu halten. Dabei ermöglicht die erfindungsgemäße Modellierung der Katalysatortemperatur, auf aufwendige Temperaturmessungen im Katalysator zu verzichten. Ein Temperatursensor in dem Katalysator ist nicht erforderlich. Zur Steigerung der Genauigkeit des Verfahrens kann die Abgastemperatur hinzugezogen werden.

Durch die Abgasrückführung kann der Massenstrom durch die Brennkraftmaschine und damit der Wärmestrom im Abgasstrang reduziert werden. Dies stellt eine Auskühlung des Abgasstrangs dar. Niedrige Temperaturen im Brennraum der Brennkraftmaschine entstehen bei der Abgasrückführung im Wesentlichen durch die spätere Verbrennung auf Grund einer langsameren Geschwindigkeit der Flammenfront im Brennraum.

Erfindungsgemäß wird bei steigender Temperatur mehr Abgas zurückgeführt. Dies hat zur Folge, dass der Luftüberschuss im Ansaugrohr entsprechend der Menge des rückgeführten Abgases vermindert wird. Dies hat wiederum zur Folge, dass die Temperatur im Brennraum geringer wird. Daraus ergibt sich dann eine geringere Temperatur des Abgases und damit des Katalysators. Durch die vermehrte Rückführung von Abgas aufgrund der steigenden Temperatur wird somit die Temperatur des Katalysators vermindert.

Insgesamt wird damit gewährleistet, daß die Temperatur des Katalysators unter der Grenztemperatur verbleibt und somit ein optimaler Betrieb insbesondere des NOx-Speicherkatalysators möglich ist.

Bei einer anderen Ausführungsform der Erfindung wird die Temperatur des Katalysators gemessen.

Bei einer weiteren vorteilhaften Weiterbildung der Erfindung wird die Abgasrückführung in Abhängigkeit von einer Laufunruhe gesteuert und/oder geregelt. Damit ist es möglich, die Laufunruhe als Grenze für die Steuerung und/oder Regelung der Abgasrückführrate zu berücksichtigen.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

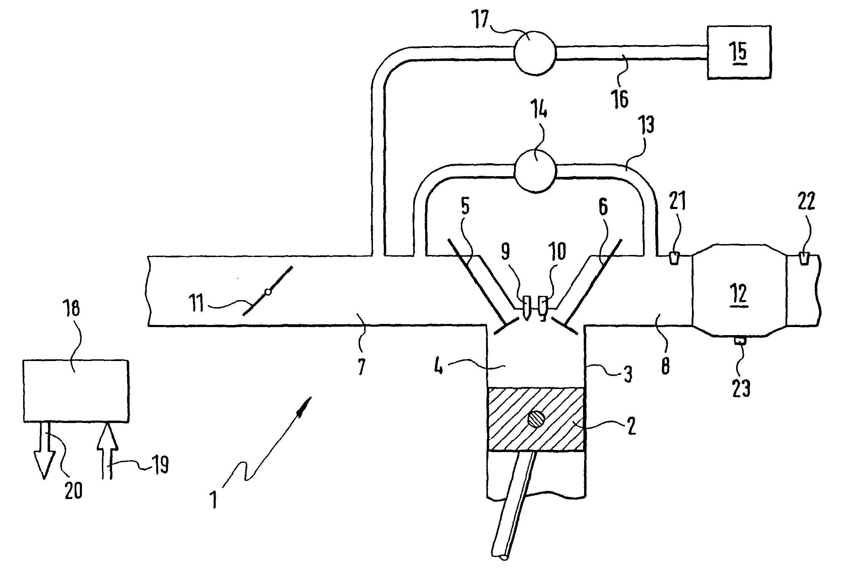

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

Die einzige Figur der Zeichnung zeigt ein schematisches Blockschaltbild eines Ausführungsbeispiels einer erfindungsgemäßen Brennkraftmaschine.

In der Figur ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient. Der Katalysator 12 ist mit einem Drei-Wege-Katalysator und einem NOx-Speicherkatalysator versehen. Mit letzterem werden entstehende Stickoxide vorübergehend zwischengespeichert, um dann von dem Drei-Wege-Katalysator reduziert zu werden.

Von dem Abgasrohr 8 führt eine Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann. Das Abgasrückführrohr 13 und das Abgasrückführventil 14 bilden eine sogenannte Abgasrückführung.

Von einem Kraftstofftank 15 führt eine Tankentlüftungsleitung 16 zu dem Ansaugrohr 7. In der Tankentlüftungsleitung 16 ist ein Tankentlüftungsventil 17 untergebracht, mit dem die Menge des dem Ansaugrohr 7 zugeführten Kraftstoffdampfes aus dem Kraftstofftank 15 einstellbar ist. Die Tankentlüftungsleitung 16 und das Tankentlüftungsventil 17 bilden eine sogenannte Tankentlüftung.

Im Bereich des Abgasrohrs 7 ist vor dem Katalysator 12 und/oder nach dem Katalysator 12 ein Lambdasensor 21, 22 vorgesehen. Es kann dabei nur einer der beiden Lambdasensoren 21, 22 oder auch beide vorhanden sein. Mit Hilfe des bzw. der Lambdasensoren 21, 22 ist in dem Steuergerät 18 ein Lambda-Regelkreis realisiert, mit dem Lambda z.B. auf Eins geregelt wird.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem LambdaSensor, einem Drehzahlsensor und dergleichen verbunden. Des weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Stellern das Verhalten der Brennkraftmaschine 1 beeinflußt werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

Die Brennkraftmaschine 1 kann in einer Mehrzahl von Betriebsarten betrieben werden. So ist es möglich, die Brennkraftmaschine 1 in einem Homogenbetrieb und in einem Schichtbetrieb zu betreiben.

Im Homogenbetrieb wird der Kraftstoff während der Ansaugphase von dem Einspritzventil 9 direkt in den Brennraum 4 der Brennkraftmaschine 1 eingespritzt. Der Kraftstoff wird dadurch bis zur Zündung noch weitgehend verwirbelt, so daß im Brennraum 4 ein im wesentlichen homogenes Kraftstoff/Luft-Gemisch entsteht. Das zu erzeugende Moment wird dabei im wesentlichen über die Stellung der Drosselklappe 11 von dem Steuergerät 18 eingestellt. Im Homogenbetrieb werden die Betriebsgrößen der Brennkraftmaschine 1 derart gesteuert und/oder geregelt, daß Lambda gleich Eins ist. Der Homogenbetrieb wird insbesondere bei Vollast angewendet.

Im Schichtbetrieb wird der Kraftstoff während der Verdichtungsphase von dem Einspritzventil 9 direkt in den Brennraum 4 der Brennkraftmaschine 1 eingespritzt. Damit ist bei der Zündung durch die Zündkerze 10 kein homogenes Gemisch im Brennraum 4 vorhanden, sondern eine Kraftstoffschichtung. Die Drosselklappe 11 kann, abgesehen von Anforderungen z.B. der Abgasrückführung und/oder der Tankentlüftung, vollständig geöffnet und die Brennkraftmaschine 1 damit entdrosselt betrieben werden. Das zu erzeugende Moment wird im Schichtbetrieb weitgehend über die Kraftstoffmasse eingestellt. Mit dem Schichtbetrieb kann die Brennkraftmaschine 1 insbesondere im Leerlauf und bei Teillast betrieben werden.

Zwischen den genannten Betriebsarten der Brennkraftmaschine 1 kann hin- und her- bzw. umgeschaltet werden. Derartige Umschaltungen werden von dem Steuergerät 18 durchgeführt.

Für den Betrieb des NOx-Speicherkatalysators ist es erforderlich, daß dessen Temperatur unterhalb einer Grenztemperatur von etwa 500 Grad Celsius verbleibt. Steigt die Temperatur des NOx-Speicherkatalysators über die Grenztemperatur, so besteht die Möglichkeit, daß sich die Speicherrate für die Speicherung von Stickoxiden verschlechtert. Dies führt zu erhöhter Schadstoffemission.

Dem Katalysator 12, insbesondere dem NOx-Speicherkatalysator, ist ein Temperatursensor 23 zugeordnet, mit dem die Temperatur des Katalysators 12, insbesondere des NOx-Speicherkatalysators, meßbar ist.

Alternativ oder zusätzlich kann dem Abgasrohr 8 ein Temperatursensor zugeordnet sein. Wesentlich ist, daß von dem Temperatursensor eine dem Abgas zugehörige Temperatur meßbar ist, aus der auf die Temperatur des Katalysators 12, insbesondere des NOx-Speicherkatalysators geschlossen werden kann.

Ebenfalls ist es möglich, daß die vorgenannte Temperatur des Katalysators 12, insbesondere des NOx-Speicherkatalysators, alternativ oder zusätzlich aus anderen Betriebsgrößen der Brennkraftmaschine 1 modelliert wird.

In Abhängigkeit von der von dem Temperatursensor 23 gemessenen Temperatur beeinflußt das Steuergerät 18 über das Abgasrückführventil 14 die Abgasrückführrate der Abgasrückführung.

Das Steuergerät 18 steuert und/oder regelt die Abgasrückführrate derart, daß die von dem Temperatursensor 23 gemessene Temperatur nicht die Grenztemperatur überschreitet. Dabei wird durch das Steuergerät 18 im Falle einer ansteigenden Temperatur des NOx-Speicherkatalysators die Abgasrückführrate erhöht, so daß also mehr Abgas aus dem Abgasrohr 8 in das Ansaugrohr 7 zurückgeführt wird. Umgekehrt wird im Falle einer fallenden Temperatur die Abgasrückführrate wieder vermindert.

Im Falle einer ansteigenden Temperatur wird durch das vermehrte rückgeführte Abgas der Luftüberschuß im Ansaugrohr 7 verringert. Das Luft/Kraftstoff-Verhältnis Lambda vermindert sich entsprechend. Aufgrund des geringeren Luftüberschusses werden die Temperaturen bei der Verbrennung und damit im Brennraum 4 der Brennkraftmaschine 1 gesenkt. Dies hat eine Verminderung der Temperatur der Abgase und damit auch eine Verminderung der Temperatur des NOx-Speicherkatalysators zur Folge.

Gleichzeitig ändert sich jedoch der Druck im Ansaugrohr 7 bei voller Entdrosselung nicht. Dort wird der verminderte Luftüberschuß durch das rückgeführte Abgas ersetzt, so daß der Druck im Ansaugrohr 7 etwa konstant bleibt. Dies hat wiederum zur Folge, daß die Stellung der Drosselklappe 11 im Ansaugrohr 7 nicht verändert werden muß. Bei einer Androsselung der Drosselklappe 11 z.B. auf Grund einer Anforderung der Tankentlüftung muss die Drosselklappe 11 jedoch geschlossen werden, damit der Druck im Ansaugrohr 7 konstant bleibt.

Der vorstehend erwähnte Luftüberschuß ist insbesondere im Schichtbetrieb vorhanden. Der Luftüberschuß ist jedoch auch bei einem mageren Homogenbetrieb vorhanden. Die beschriebene, von der Temperatur des Katalysators 12 abhängige Abgasrückführung kann somit im Schichtbetrieb und/oder im Homogenbetrieb zur Anwendung kommen.

Anstelle der Messung der Temperatur des Katalysators 12 ist es möglich, die Speicherrate des NOx-Speicherkatalysators zu ermitteln und als Maßstab für die Temperatur des Katalysators 12 zu verwenden. Sinkt die Speicherrate des NOx-Speicherkatalysators 12, so ist die Abgasrückführrate zu erhöhen, um die Temperatur des Katalysators 12 zu vermindern, und um damit die Speicherrate wieder zu erhöhen.

Als weitere Möglichkeit kann die Laufunruhe bei der Steuerung und/oder Regelung der Abgasrückführung berücksichtigt werden. Diese Laufunruhe stellt eine Grenze dar für die Beeinflussung der Abgasrückführrate in Abhängigkeit von der Temperatur des Katalysators 12. Durch diese Berücksichtgung der Laufunruhe kann diese Grenze entsprechend in die Steuerung und/oder Regelung der Brennkraftmaschine 1 einbezogen werden.

## Patentansprüche

1. Verfahren zum Betreiben einer Brennkraftmaschine (1) insbesondere eines Kraftfahrzeugs, bei dem Kraftstoff in einer ersten Betriebsart während einer Verdichtungsphase und in einer zweiten Betriebsart während einer Ansaugphase in einen Brennraum (4) eingespritzt wird, bei dem das Abgas einem Katalysator (12) zugeführt wird, bei dem Abgas zurückgeführt wird, und bei dem die Abgasrückführrate der Abgasrückführung unter anderem in Abhängigkeit von der Temperatur des Katalysators (12) gesteuert und/oder geregelt wird, **dadurch gekennzeichnet, dass** die Temperatur des Katalysators (12) aus einer Temperatur des Abgases abgeleitet wird oder/und modelliert wird, und dass bei steigender Temperatur mehr Abgas zurückgeführt wird.

2. Verfahren nach Anspruch 1, **dadurch gekennzeichnet, dass** die Temperatur des Katalysators (12) gemessen wird.

3. Verfahren nach einem der Ansprüche 1 oder 2, **dadurch gekennzeichnet, dass** die Abgasrückführung in Abhängigkeit von einer Laufunruhe gesteuert und/oder geregelt wird.

4. Steuerelelement, insbesondere Read-Only-Memory oder Flash-Memory, für ein Steuergerät (18) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem der Ansprüche 1 bis 3 geeignet ist.

5. Brennkraftmaschine (1) insbesondere eines Kraftfahrzeugs, mit einem Brennraum (4), in den Kraftstoff in einer ersten Betriebsart während einer Verdichtungsphase und in einer zweiten Betriebsart während einer Ansaugphase einspritzbar ist, mit einem Abgasrohr (8), in dem ein Katalysator (12) angeordnet ist, mit einer Abgasrückführung von dem Abgasrohr (8) zu einem Ansaugrohr (7), und mit einem Steuergerät (18) zur Steuerung und/oder Regelung von Betriebsgrößen der Brennkraftmaschine (1), wobei durch das Steuergerät (18) die Abgasrückführrate der Abgasrückführung in Abhängigkeit von der Temperatur des Katalysators (12) steuerbar und/oder regelbar ist, **dadurch gekennzeichnet, dass** die Temperatur des Katalysators (12) aus einer Temperatur des Abgases abgeleitet wird oder/und modelliert wird, und dass bei steigender Temperatur mehr Abgas zurückgeführt wird.

6. Steuergerät (18) für eine Brennkraftmaschine (1) insbesondere eines Kraftfahrzeugs, wobei die Brennkraftmaschine (1) mit einem Brennraum (4) versehen ist, in den Kraftstoff in einer ersten Betriebsart während einer Verdichtungsphase und in einer zweiten Betriebsart während einer Ansaugphase einspritzbar ist, wobei die Brennkraftmaschine (1) mit einem Abgasrohr (8) versehen ist, in dem ein Katalysator (12) angeordnet ist, wobei die Brennkraftmaschine (1) mit einer Abgasrückführung von dem Abgasrohr (8) zu einem Ansaugrohr (7) versehen ist, und mit einem Steuergerät (18) zur Steuerung und/oder Regelung von Betriebsgrößen der Brennkraftmaschine (1), wobei durch das Steuergerät (18) die Abgasrückführrate der Abgasrückführung in Abhängigkeit von der Temperatur des Katalysators (12) steuerbar und/oder regelbar ist, **dadurch gekennzeichnet, dass** die Temperatur des Katalysators (12) aus einer Temperatur des Abgases abgeleitet wird oder/und modelliert wird, und dass bei steigender Temperatur mehr Abgas zurückgeführt wird.

## Claims

1. Method for operating an internal combustion engine (1), in particular of a motor vehicle, in which in a first operating mode fuel is injected into a combustion chamber (4) during a compression phase, and in a second operating mode fuel is injected into a combustion chamber (4) during an intake phase, in which the exhaust gas is fed to a catalytic converter (12), in which exhaust gas is recirculated, and in which the exhaust gas recirculation rate of the exhaust gas recirculation is controlled and/or regulated inter alia as a function of the temperature of the catalytic converter (12), **characterized in that** the temperature of the catalytic converter (12) is derived from a temperature of the exhaust gas or/and is modelled, and **in that** more exhaust gas is recirculated as the temperature rises.

2. Method according to Claim 1, **characterized in that** the temperature of the catalytic converter (12) is measured.

3. Method according to either of claims 1 and 2, **characterized in that** the exhaust gas recirculation is controlled and/or regulated as a function of a lack of engine smoothness.

4. Control element, in particular read-only memory or flash memory, for a control unit (18) of an internal combustion engine (1), in particular of a motor vehicle, on which a program which can run on a computer unit, in particular on a microprocessor, and is suitable for carrying out a method according to one of Claims 1 to 3 is stored.

5. Internal combustion engine (1), in particular of a motor vehicle, having a combustion chamber (4) into which in a first operating mode fuel can be injected during a compression phase and in a second operating mode fuel can be injected during an intake phase, having an exhaust pipe (8), in which there is arranged a catalytic converter (12), having an exhaust gas recirculation from the exhaust pipe (8) to an intake pipe (7), and having a control unit (18) for controlling and/or regulating operating variables of the internal combustion engine (1), it being possible for the exhaust gas recirculation rate of the exhaust gas recirculation to be controlled and/or regulated by the control unit (18), as a function of the temperature of the catalytic converter (12), **characterized in that** the temperature of the catalytic converter (12) is derived from a temperature of the exhaust gas or/and is modelled, and **in that** more exhaust gas is recirculated as the temperature rises.

6. Control unit (18) for an internal combustion engine (1), in particular of a motor vehicle, the internal combustion engine (1) being provided with a combustion chamber (4), into which in a first operating mode fuel can be injected during a compression phase and in a second operating mode fuel can be injected during an intake phase, the internal combustion engine (1) being provided with an exhaust pipe (8) in which there is arranged a catalytic converter (12), the internal combustion engine (1) being provided with an exhaust gas recirculation from the exhaust pipe (8) to an intake pipe (7), and with a control unit (18) for controlling and/or regulating operating variables of the internal combustion engine (1), it being possible for the exhaust gas recirculation rate of the exhaust gas recirculation to be controlled and/or regulated by the control unit (18) as a function of the temperature of the catalytic converter (12), **characterized in that** the temperature of the catalytic converter (12) is derived from a temperature of the exhaust gas or/and is modelled, and **in that** more exhaust gas is recirculated as the temperature rises.

## Revendications

1. Procédé permettant de faire fonctionner un moteur à combustion interne (1), notamment d'un véhicule automobile, pour lequel du carburant est injecté dans un premier mode de fonctionnement pendant une phase de compression et dans un deuxième mode de fonctionnement pendant une phase d'aspiration dans une chambre de combustion (4) dans laquelle les gaz d'échappement sont amenés à un catalyseur (12), des gaz d'échappement étant refoulés et les taux de refoulement des gaz d'échappement étant commandés et/ou régulés notamment en fonction de la température du catalyseur (12),
**caractérisé en ce que**
la température du catalyseur (12) est déduite et/ou modélisée à partir d'une température des gaz d'échappement et, pour une température croissante, davantage de gaz d'échappement est refoulé.

2. Procédé selon la revendication 1,
**caractérisé en ce que**
la température du catalyseur (12) est mesurée.

3. Procédé selon l'une quelconque des revendications 1 ou 2,
**caractérisé en ce que**
le refoulement des gaz d'échappement est commandé et/ou régulé en fonction d'une instabilité de marche.

4. Elément de commande, notamment Read-Only-Memory ou Flash-Memory, pour un appareil de commande (18) d'un moteur à combustion interne (1), notamment d'un véhicule automobile, sur lequel est enregistré un programme pouvant fonctionner sur un ordinateur, notamment sur un microprocesseur, et approprié pour exécuter un procédé selon l'une quelconque des revendications 1 à 3.

5. Moteur à combustion interne (1), notamment d'un véhicule automobile, muni d'une chambre de combustion (4) dans laquelle du carburant peut être injecté dans un premier mode de fonctionnement pendant une phase de compression et dans un deuxième mode de fonctionnement pendant une phase d'aspiration, d'un tuyau de gaz d'échappement (8) dans lequel est disposé un catalyseur (12), d'un refoulement des gaz d'échappement du tuyau des gaz d'échappement (8) à la tubulure d'admission (7) et d'un appareil de commande (18) pour la commande et/ou la régulation des grandeurs de fonctionnement du moteur à combustion interne (1), les taux de refoulement des gaz d'échappement pouvant être commandés et/ou régulés par l'appareil de commande (18) en fonction de la température du catalyseur (12),
**caractérisé en ce que**
la température du catalyseur (12) est déduite et/ou modélisée à partir d'une température des gaz d'échappement et, pour une température croissante, davantage de gaz d'échappement sont refoulés.

6. Appareil de commande (18) pour un moteur à combustion interne (1), notamment d'un véhicule automobile, le moteur à combustion interne (1) étant pourvu d'une chambre de combustion (4) dans laquelle du carburant peut être injecté dans un premier mode de fonctionnement pendant une phase de compression et dans un deuxième mode de fonctionnement pendant une phase d'aspiration, le moteur à combustion interne (1) étant muni d'un tuyau de gaz d'échappement (8) dans lequel est disposé un catalyseur (12), d'un refoulement des gaz d'échappement du tuyau des gaz d'échappement (8) à une tubulure d'admission (7) et d'un appareil de commande (18) pour la commande et/ou la régulation des grandeurs de fonctionnement du moteur à combustion interne (1), les taux de refoulement des gaz d'échappement pouvant être commandés et/ou régulés par l'appareil de commande (18) en fonction de la température du catalyseur (12),
**caractérisé en ce que**
la température du catalyseur (12) est déduite et/ou modélisée à partir d'une température des gaz d'échappement et, pour une température croissante, davantage de gaz d'échappement sont refoulés.
